# EUROPÄISCHE PATENTSCHRIFT

(11) **EP 2 334 522 B1**
(45) Veröffentlichungstag und Bekanntmachung des Hinweises auf die Patenterteilung: **05.09.2012**
(21) Anmeldenummer: 09743882.4
(22) Anmeldetag: 30.09.2009
(51) Int. Cl.: B60R 21/276, B60R 21/239

(54) **AIRBAGMODUL FÜR EIN KRAFTFAHRZEUG**
AIRBAG MODULE FOR A MOTOR VEHICLE
MODULE COUSSIN DE SÉCURITÉ GONFLABLE POUR UN VÉHICULE À MOTEUR

(30) Priorität: 07.10.2008 DE 102008050759
(43) Veröffentlichungstag der Anmeldung: 22.06.2011
(73) Patentinhaber: Takata AG, 63743 Aschaffenburg (DE)
(72) Erfinder: SAUER, Frank, 63843 Niedernberg (DE)
(74) Vertreter: Müller, Wolfram Hubertus
(86) Internationale Anmeldenummer: PCT/EP2009/062681
(87) Internationale Veröffentlichungsnummer: WO 2010/040669

(56) Entgegenhaltungen:
- EP-A- 1 803 613
- US-A1- 2004 155 442
- US-A1- 2007 228 710

## Beschreibung

Die Erfindung betrifft ein Airbagmodul für ein Kraftfahrzeug gemäß dem Oberbegriff des Anspruchs 1.

Ein derartiges Airbagmodul weist ein Gassackpaket auf, umfassend einen Gassack, der zum Schutz einer Person mit Gas aufblasbar ist, ein zusätzliches bewegbares Element, das dazu eingerichtet und vorgesehen ist, eine Zustandsgröße des Gassackes zu beeinflussen, wobei es sich bei dieser Zustandsgröße um einen Druck des im Gassack befindlichen Gases handeln kann, und eine Schutzhülle, die einen Innenraum des Gassackpaketes gasdicht umgibt, wobei der Gassack und das bewegbare Element in jenem Innenraum angeordnet sind. Eine solche Schutzhülle kann aus einem flexiblen, auch elastischen Material gebildet sein. Vorzugsweise handelt es sich um eine Schutzhülle in Form einer Schutzfolie. Des Weiteren weist ein solches Airbagmodul eine dem bewegbaren Element zugeordnete Bewegungserzeugungsvorrichtung (Aktuator) auf, die dazu ausgebildet ist, das bewegbare Element anzutreiben.

In der gattungsgemäßen US 2007/228710 A1 wird ein Airbagmodul für ein Kraftfahrzeug beschrieben, das einen Airbag mit einem Halteseil auf der Insassenseite und einem Halteseil auf der Fahrzeugkarosserieseite aufweist. Ein Zwischenabschnitt des Halteseils auf der Fahrzeugkarosserieseite wird am Gehäuse des Airbagmoduls durch einen Haltemechanismus gehalten. Bei vollständiger Befüllung des Airbags wird der Abstand zwischen dem Gehäuse und dem Halteseil auf der Insassenseite verringert, wenn das Halteseil auf der Fahrzeugkarosserieseite durch den Haltemechanismus gehalten wird, wobei der Abstand vergrößert wird, wenn das Halteseil auf der Fahrzeugkarosserieseite vom Haltemechanismus gelöst ist. Das Halteseil auf der Insassenseite und das Halteseil auf der Fahrzeugkarosserieseite sind miteinander verbunden.

Der Erfindung liegt das Problem zugrunde, ein Airbagmodul der eingangs genannten Art bereitzustellen, das im Hinblick auf den beanspruchten Bauraum verbessert ist.

Dieses Problem wird durch ein Airbagmodul mit den Merkmalen des Anspruchs 1 gelöst.

Danach ist vorgesehen, dass die Bewegungserzeugungsvorrichtung separat außerhalb des Innenraumes des Gassackpaketes angeordnet ist, also zumindest durch die Schutzhülle von den im Innenraum des Gassackpaketes angeordneten Komponenten des Airbagmoduls getrennt ist. Dies ermöglicht eine kleinbauende Ausführung des Gassackpaketes, da aufgrund der außerhalb des Gassackpaketes angeordneten Bewegungserzeugungsvorrichtung das Gassackpaket auf einfache Weise kompaktifiziert werden kann (durch Evakuieren des durch die Schutzhülle umgebenen Innenraumes des Gassackpaketes), insbesondere kann die Faltung des Gassackes einfacher ausfallen, da das Faltbild die Bewegungserzeugungsvorrichtung nicht berücksichtigen muss.

Das zum Aufblasen des Gassackes benötigte Gas wird vorzugsweise durch einen separaten, von der Bewegungserzeugungsvorrichtung verschiedenen Gasgenerator bereitgestellt, der insbesondere außerhalb des Innenraumes des Gassackpaketes angeordnet ist.

Bevorzugt ist die Bewegungserzeugungsvorrichtung dazu ausgebildet, das bewegbare Element aus einer Anfangsposition, in der das bewegbare Element nicht die besagte Zustandsgröße beeinflusst, derart herauszubewegen, dass das bewegbare Element die Zustandsgröße beeinflusst, wobei es sich vorzugsweise bei jener Zustandsgröße um den Druck des im Gassack befindlichen Gases handelt. Hierdurch kann der Gassack an das Gewicht (Größe) und die Position einer zu schützenden Person relativ zum Gassack angepasst werden. Es ist dabei bevorzugt vorgesehen, dass mittels des bewegbaren Elementes der besagte Druck insbesondere konstant (während des Aufblasvorganges) oder erniedrigt werden kann (z.B. im so genannten out-of-position-Fall, bei dem der zu schützende Insasse sich zu nah am Gassack befindet).

Um das bewegbare Element aus dessen Anfangsposition heraus bewegen zu können, ist die Bewegungserzeugungsvorrichtung bevorzugt dazu ausgebildet, das bewegbare Element mit einem Druck zu beaufschlagen. Dieser Druck wird durch die Bewegungserzeugungsvorrichtung vorzugsweise pyrotechnisch bereitgestellt (Gasgenerator).

Um die Ausmaße des Gassackpaketes möglichst gering zu halten, ist der durch die Schutzhülle umgebene Innenraum vorzugsweise evakuiert, d.h., der im Innenraum des Gassackpaketes herrschende Druck ist signifikant niedriger als der atmosphärische Druck unter Standardbedingungen, so dass sich die Schutzhülle aufgrund des im Innenraum herrschenden Unterdrucks (vorzugsweise Vakuum) zusammenzieht und sich eng an die darin befindlichen Komponenten des Airbagmoduls anschmiegt.

Des Weiteren weist das Airbagmodul zum Tragen von Komponenten des Airbagmoduls einen außerhalb des Innenraumes des Gassackpaketes angeordneten Träger auf, über den das Airbagmodul auch in oder an einem Kraftfahrzeug befestigt werden kann. Vorzugsweise ist die Bewegungserzeugungsvorrichtung an dem Träger befestigt.

Weiterhin ist die Bewegungserzeugungsvorrichtung bevorzugt entlang einer ersten Richtung in eine am Träger ausgebildete Durchgangsöffnung eingeführt, so dass ein freier Endabschnitt der Bewegungserzeugungsvorrichtung, über den der Druck zum Beaufschlagen des bewegbaren Elementes bereitgestellt wird, entlang der ersten Richtung in den Träger des Airbagmoduls herein steht. Dabei liegt insbesondere ein Bereich der Schutzhülle einer quer zur ersten Richtung erstreckten Stirnseite der Bewegungserzeugungsvorrichtung gegenüber, wobei dieser Bereich der Schutzhülle durch den durch die Bewegungserzeugungsvorrichtung bereitgestellten Druck und /oder die Wärme eines den Druck vermittelnden Gases zerstört wird. Dieser beaufschlagt nämlich zuerst jenen Bereich der Schutzhülle und sodann das dahinter liegende bewegbare Element. Vorzugsweise liegt der freie Endabschnitt der Bewegungserzeugungsvorrichtung entlang der ersten Richtung dem bewegbaren Element gegenüber.

In einem Ausführungsbeispiel der Erfindung ist der freie Endabschnitt der Bewegungserzeugungsvorrichtung entlang der ersten Richtung in eine weitere Durchgangsöffnung einer im Innenraum des Gassackpaketes angeordneten Komponente des Airbagmoduls eingeführt oder ist entlang der ersten Richtung vor jener weiteren Durchgangsöffnung angeordnet, wobei jene weitere Durchgangsöffnung vorzugsweise mit der am Träger ausgebildeten Durchgangsöffnung fluchtet, d.h., die beiden Öffnungen liegen einander entlang der ersten Richtung gegenüber. Bei jener Komponente handelt es sich bevorzugt um ein Klemmelement, einen Flansch (eines Diffusors) oder ein Reservoir zum Speichern eines Kühlmittels. Jene Komponente kann die vorstehenden Funktionen auch in beliebiger Weise vereinen, also z.B. als ein Klemmelement für einen Gassack ausgebildet sein, wobei jenes Klemmelement ein Reservoir bildet. Bei jenem Klemmelement kann es sich des Weiteren um einen umlaufenden Flansch eines Diffusors handeln.

Jene weitere Durchgangsöffnung weist einen die weitere Durchgangsöffnung umlaufenden Rand auf, von dem in der ersten Richtung eine die weiterer Durchgangsöffnung umlaufende Wandung der besagten Komponente absteht, die den Endabschnitt quer zur ersten Richtung umgeben kann. Vorzugsweise liegt der freie Endabschnitt der Bewegungserzeugungsvorrichtung an jener Wandung an, und zwar zumindest unter Zwischenlage der Schutzhülle des Gassackpaketes.

Optional ist ein den freien Endabschnitt der Bewegungserzeugungsvorrichtung quer zur ersten Richtung umgreifendes Dichtelement vorgesehen, das einerseits dem Schutz der Schutzhülle und andererseits zur Abdichtung der weiteren Durchgangsöffnung dient, wobei der besagte Endabschnitt unter Zwischenlage des Dichtelementes und der Schutzhülle an der Wandung anliegen kann. Dabei umgreift das Dichtelement den freien Endabschnitt und die Schutzhülle umgreift im Bereich des freien Endabschnittes jenes Dichtelement und den freien Endabschnitt der Bewegungserzeugungsvorrichtung.

Zum Tragen der Bewegungserzeugungsvorrichtung ist eine die Bewegungserzeugungsvorrichtung umgebene Hülse vorgesehen, die zum Festlegen der Bewegungserzeugungsvorrichtung am Träger des Airbagmoduls an einem umlaufenden Randbereich der Durchgangsöffnung des Trägers befestigt ist. Die Hülse dient dabei gleichzeitig zum Schutz der Bewegungserzeugungsvorrichtung.

Bevorzugt ist die weitere, im Innenraum des Gassackpaketes vorgesehene Komponente als ein Klemmelement zum Festklemmen des Gassackes am Träger des Airbagmoduls ausgebildet, wobei das Klemmelement vorzugsweise durch einen umlaufenden Flansch eines Diffusors des Airbagmoduls gebildet ist. Ein solcher Diffusor ist dazu ausgebildet vom Gasgenerator ausgestoßene Gase zu verwirbeln.

Besonders bevorzugt ist das Klemmelement als ein Reservoir ausgebildet, das dazu eingerichtet und vorgesehen ist, ein Kühlmittel aufzunehmen, das zum Kühlen im Gassack befindlicher Gase dient. Durch Kühlen von heißen, im Gassack befindlichen Gasen, kann der im Gassack herrschende Druck innerhalb kürzester Zeit abgesenkt werden. Dabei ist das bewegbare Element vorzugsweise dazu ausgebildet, beim Herausbewegen aus der Anfangsposition die Kühlflüssigkeit aus dem Reservoir heraus zu drücken, um das Kühlmittel in einen Innenraum des Gassackes freizusetzen. D.h., das druckbeaufschlagte bewegbare Element ist als Kolben ausgebildet, der den besagten Druck an die Kühlflüssigkeit weitergibt, indem er seinerseits die Kühlflüssigkeit mit Druck beaufschlagt. Die Kühlflüssigkeit wird hierdurch aus dem Reservoir ausgestoßen. Ein solcher Kolben kann natürlich auch in Form einer flexiblen Membran vorliegen.

In einer weiteren Ausführungsform der Erfindung ist das bewegbare Element dazu ausgebildet, in seiner Anfangsposition eine Abströmöffnung des Airbagmoduls zu verschließen, durch die in einem geöffneten Zustand Gas aus dem Gassack in einen das Airbagmodul umgebenden Außenraum entweichen kann, wobei das bewegbare Element beim Herausbewegen aus der Anfangsposition die Abströmöffnung öffnet, so dass Gas aus dem Gassack durch jene Abströmöffnung hindurch aus dem Gassack abgelassen werden kann.

Bevorzugt ist das bewegbare Element in seiner Anfangsposition an einem im Innenraum des Gassackpakets angeordneten Teil des Airbagmoduls befestigt, wobei es sich bei jenem Teil vorzugsweise um einen Diffusor zum Lenken in den Gassack einzuleitender Gase handelt.

Bevorzugt ist das bewegbare Element über eine Sollbruchverbindung an dem besagten Teil des Airbagmoduls festgelegt, wobei jene Sollbruchverbindung bevorzugt beim Herausbewegen des bewegbaren Elementes aus seiner Anfangsposition zerstört wird, so dass das bewegbare Element vorzugsweise frei beweglich ist.

Besonders bevorzugt ist die besagte Abströmöffnung an einem Diffusor ausgebildet, und zwar insbesondere an einem Flansch des Diffusors, über den der Diffusor am Träger des Airbagmoduls festlegbar ist, wobei der Flansch auch zum Festklemmen des Gassackes am Träger des Airbagmoduls dienen kann.

In einer weiteren Ausführungsform der Erfindung ist das bewegbare Element dazu ausgebildet, in seiner Anfangsposition ein Fangband am Träger festzulegen, so dass ein mit dem Fangband zusammenwirkender Verschluss einer Abströmöffnung des Gassackes jene am Gassack ausgebildete Abströmöffnung verschließt. Eine solche öffenbare Abströmöffnung dient zum Ablassen von Gas aus dem Gassack zum Beeinflussen des im Gassack herrschenden Druckes, so dass der Gassack gezielt an die Größe (Gewicht) und Position (relativ zum Gassack) einer zu schützenden Person angepasst werden kann. Das Fangband ist weiterhin vorzugsweise derart am bewegbaren Element festgelegt, dass das bewegbare Element das Fangband beim Herausbewegen aus der Anfangsposition freigibt, so dass das Fangband nicht mehr über das bewegbare Element am Träger des Airbagmoduls festgelegt ist. Dies bewirkt ein Öffnen des Verschlusses der Abströmöffnung. Der zugrunde liegende Öffnungsmechanismus kann dabei dergestalt ausgebildet sein, dass das Fangband bei einem in der Anfangsposition befindlichen bewegbaren Element unter Spannung steht und dabei einen Verschluss vor der Abströmöffnung hält, wobei sich das Fangband beim Herausbewegen des bewegbaren Elementes aus der Anfangsposition derart lockert, dass der Verschluss nicht länger vor der Abströmöffnung angeordnet ist und diese freigibt.

Bevorzugt ist das bewegbare Element in seiner Anfangsposition über eine Sollbruchverbindung an einem im Innenraum des Gassackpakets angeordneten Teil des Airbagmoduls festgelegt, bei dem es sich vorzugsweise um einen Flansch eines Diffusors des Airbagmoduls handelt. Die Sollbruchverbindung ist dazu eingerichtet und vorgesehen, beim Beaufschlagen des bewegbaren Elementes mit dem durch die Bewegungserzeugungsvorrichtung bereitgestellten Druck durchtrennt zu werden, so dass das bewegbare Element durch den besagten Druck aus seiner Anfangsposition heraus bewegt wird. Hierbei tritt die besagte Lockerung des Fangbandes auf.

Natürlich kann das bewegbare Element sowohl als Verschluss einer am Airbagmodul (z.B. am Diffusor oder am Flansch des Diffusors) vorgesehenen Abströmöffnung dienen, als auch zum Freigeben eines Fangbandes, dass mit einer Abströmöffnung des Gassackes zusammenwirkt. Ggf. kann auf das Fangband bzw. auf die am Gassack ausgebildete Abströmöffnung verzichtet werden.

Zum Festlegen des Fangbandes am bewegbaren Bereich weist dieses an einem freien Ende eine Schlaufe auf, die um das bewegbare Element herumgelegt ist.

Alternativ hierzu ist ein freier Endabschnitt des Fangbandes zum Festlegen des Fangbandes am bewegbaren Element formschlüssig in einer Ausnehmung des bewegbaren Elementes angeordnet.

In einer weiteren alternativen Variante ist ein freier Endabschnitt des Fangbandes zum Festlegen des Fangbandes am bewegbaren Element in eine Durchgangsöffnung des bewegbaren Elementes eingeführt, wobei jener Endabschnitt insbesondere einen die Durchgangsöffnung berandenden Randbereich des bewegbaren Elementes hintergreift.

Die dargestellten Merkmale und Vorteile der Erfindung sollen anhand der nachfolgenden Figurenbeschreibungen von Ausführungsbeispielen verdeutlicht werden.

Es zeigen:
- Fig. 1:: eine Explosionsansicht einer Ausführungsform des erfindungsgemäßen Airbagmoduls,
- Fig. 2:: eine geschnittene Ansicht des in der Figur 1 gezeigten Airbagmoduls,
- Fig. 3:: eine ausschnitthafte Schnittdarstellung einer weiteren Ausführungsform des erfindungsgemäßen Airbagmoduls mit arretiertem Fangband,
- Fig. 4:: eine ausschnitthafte Draufsicht auf einen Diffusor (samt Flansch) des in der Figur 3 gezeigten Airbagmoduls,
- Fig. 5:: einen ausschnitthaften Schnitt entlang der Linie A-A der Figur 4,
- Fig. 6:: eine ausschnitthafte Schnittdarstellung des in der Figur 3 gezeigten Airbagmoduls mit ausgelöster Bewegungserzeugungsvorrichtung,
- Fig. 7:: eine ausschnitthafte Schnittdarstellung des in der Figur 6 gezeigten Airbagmoduls, wobei das druckbeaufschlagte bewegbare Element das Fangband freigegeben hat,
- Fig. 8:: einen alternativen Schnitt einer Abwandlung des in der Figur 6 gezeigten bewegbaren Elementes, und
- Fig. 9:: einen weiteren alternativen Schnitt einer Abwandlung des in der Figur 6 gezeigten bewegbaren Elementes.

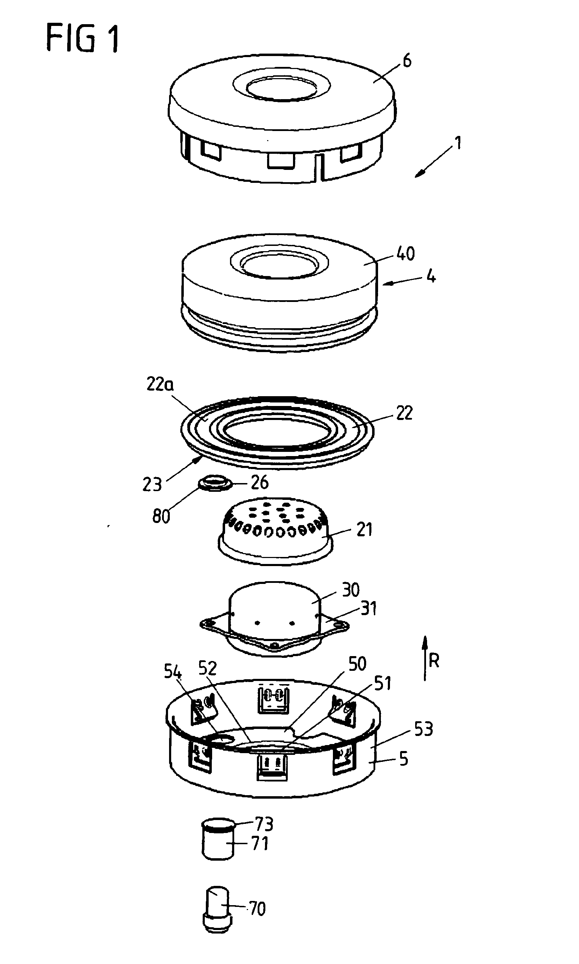

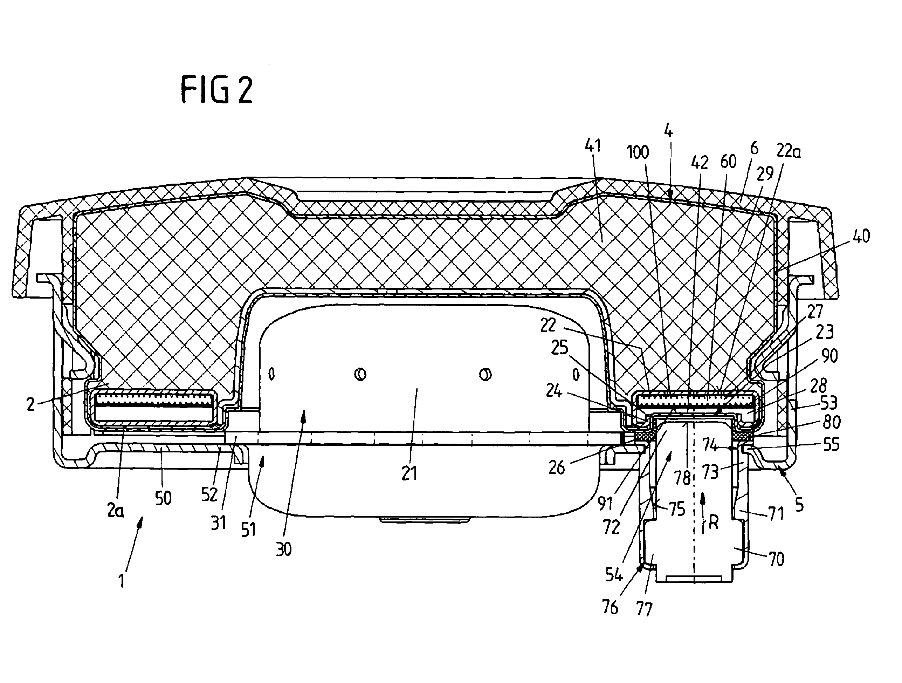

Figur 1 zeigt im Zusammenhang mit Figur 2 ein erfindungsgemäßes Airbagmodul 1. Bei dem Airbagmodul 1 handelt es sich um ein Fahrerairbagmodul. Die erfindungsgemäße Lehre ist jedoch auch auf sonstige Airbagmodultypen anwendbar, insbesondere Beifahrerairbagmodule.

Das Airbagmodul 1 weist einen Gassack 2 und einen im Gassack 2 angeordneten Diffusor 21 zum Verwirbeln durch einen Gasgenerator 30 erzeugter Gase auf.

Der Diffusor 21 ist kappenförmig ausgebildet und weist einen mit dem Diffusor 21 verbundenen, umlaufenden Flansch 22 auf, der lösbar (z.B. Schraubverbindung) bzw. unlösbar (z.B. Schweißverbindung) mit dem Diffusor 21 verbunden sein kann oder aber einstückig an den Diffusor 21 angeformt sein kann. Der Flansch 22 ist dabei als ein Reservoir zum Speichern eines Kühlmittels 60 ausgebildet.

Der Gassack 2 und der Diffusor 21 samt Flansch 22 sind in einem durch eine Schutzhülle 40 umgebenen Innenraum 41 angeordnet und bilden auf diese Weise zusammen mit der besagten Schutzhülle 40 ein Gassackpaket 4. Der Innenraum 41 des Gassackpaketes 4 ist evakuiert, so dass Gassackpaket 4 möglichst kleinbauend ausfällt.

Zum Aufblasen des Gassackes 2 dient der Gasgenerator 30, der in einer durch den Diffusor 21 vorgegebenen Eindrückung des Gassackpaketes 4 angeordnet ist, und zwar außerhalb des Gassackpaketes 4.

Zum Tragen des Gassackpaketes 4 und des Gasgenerators 30 ist ein Träger 5 vorgesehen, der einen entlang einer Erstreckungsebene erstreckten Boden 50 mit einer mittigen, durchgängigen Gasgeneratoraussparung 51 aufweist, durch die der Gasgenerator 30 abschnittsweise herausragt, wobei der Gasgenerator 30 über einen umlaufenden Flansch 31 des Gasgenerators 30 an einem die Gasgeneratoraussparung 51 berandenden Randbereich 52 des Bodens 50 des Trägers 5 festgelegt ist. Vom Boden 50 steht entlang einer ersten Richtung R, die bei einem Fahrerairbagmodul vorzugsweise entlang der Lenkachse verläuft, eine Wand 53 des Trägers 5 ab, die den Gasgenerator 30 in einer quer zur ersten Richtung R erstreckten Ebene (Erstreckungsebene des Bodens 50) umläuft. An jener Wand 53 ist ebenfalls eine Abdeckung 6 des Airbagmoduls 1 festgelegt, die das Gassackpaket 4 und den darunter liegenden Gasgenerator 30 überdeckt.

Zum Freisetzen des im Reservoir 22 gespeicherten Kühlmittels 60 ist eine Bewegungserzeugungsvorrichtung 70 in Form eines Gasgenerators vorgesehen, die am Boden 50 des Trägers 5 mittels einer Hülse 71 festgelegt ist, wobei jene Hülse 71 den Gasgenerator 70 quer zur ersten Richtung R umgreift. Vorzugsweise weist die Bewegungserzeugungsvorrichtung 70 eine zylindrische Form auf, wobei die Zylinderachse parallel zur ersten Richtung R verläuft. Entsprechend ist die besagte Hülse 71 vorzugsweise als ein Hohlzylinder ausgebildet.

Die Bewegungserzeugungsvorrichtung 70 ist so am Träger 5 festgelegt, dass die Bewegungserzeugungsvorrichtung 70 mit einem freien Endabschnitt 72 entlang der ersten Richtung R durch eine am Boden 50 ausgebildete Durchgangsöffnung 54 in den Träger 5 des Airbagmoduls 1 herein steht.

Zum Abdichten der Durchgangsöffnung 54 des Bodens 50 und zum Schutz der Schutzhülle 40 ist (optional) ein Dichtelement 80 vorgesehen, das den freien Endabschnitt 72 der Bewegungserzeugungsvorrichtung 70 quer zur ersten Richtung R umgreift.

Die Einzelheiten der Anordnung der Bewegungserzeugungsvorrichtung 70 bezüglich des Reservoirs 22 sind in der Schnittdarstellung gemäß Figur 2 gezeigt.

Danach weist die Hülse 71 an einem den freien Endabschnitt 72 der Bewegungserzeugungsvorrichtung 70 umlaufenden Randbereich 73 der Hülse 71 eine Nut 74 auf, in die ein die Durchgangsöffnung 54 des Trägers 5 brandender Rand 55 des Bodens 50 des Trägers 5 eingreift, so dass die Hülse 71 am Boden 50 des Trägers 5 festgelegt ist. Die Hülse 71 weist weiterhin eine der Bewegungserzeugungsvorrichtung 70 zugewandte Innenseite 75 auf, an der ebenfalls eine Nut 76 ausgebildet ist, in die ein umlaufender Bereich 77 der Bewegungserzeugungsvorrichtung 70 eingreift, so dass die Bewegungserzeugungsvorrichtung 70 fest in der Hülse 71 sitzt.

Die Hülse 71 ist so bemessen, dass die Bewegungserzeugungsvorrichtung 70 mit ihrem freien Endabschnitt 72 entlang der ersten Richtung R in den Träger 5 des Airbagmoduls hineinragt. Das optionale Dichtelement 80 umgreift dabei den freien Endabschnitt 72 der Bewegungserzeugungsvorrichtung 70 quer zur ersten Richtung R geschlossen ringförmig.

Der Durchgangsöffnung 54 des Bodens 50 des Trägers 5 liegt entlang der ersten Richtung R eine deckungsgleiche, weitere Durchgangsöffnung 23 (in der Figur 1 nicht sichtbar) des umlaufenden, als Reservoir ausgebildeten Klemmelementes 22 gegenüber. In diese Öffnung 23 kann der freie Endabschnitt 72 der Bewegungserzeugungsvorrichtung 71 ebenfalls eingeführt sein, wobei von einem Randbereich 24 jener weiteren Durchgangsöffnung 23 entlang der ersten Richtung R eine Wandung 25 absteht, die den besagten freien Endabschnitt 72 der Bewegungserzeugungsvorrichtung 70 quer zur ersten Richtung R umläuft, wobei der freie Endabschnitt 72 der Bewegungserzeugungsvorrichtung 70 so in die weitere Durchgangsöffnung 23 eingeführt sein kann, dass das den freien Endabschnitt 72 umgreifende Dichtelement 80 die Schutzhülle 40 des Gassackpaketes 4 gegen jene Wandung 25 drückt. Sofern kein solches Dichtelement 80 vorhanden ist, kann die Bewegungserzeugungsvorrichtung 70 dazu eingerichtet und vorgesehen sein, über ihren freien Endabschnitt 72 die Schutzhülle 40 des Gassackpaketes 4 gegen jene Wandung 25 zu drücken.

Das Dichtelement 80 dient somit zum einen zum Schutz der Schutzhülle 40 des Gassackpaketes 4. Zum anderen weist das Dichtelement 80 einen umlaufenden, quer zur ersten Richtung R erstreckten Fortsatz 26 auf, der entlang der ersten Richtung R zwischen einander zugewandten Randbereichen der beiden Durchgangsöffnungen 54, 23 angeordnet ist, derart, dass er jene beiden Durchgangsöffnungen 54, 23 abdichtet. Die weitere Durchgangsöffnung 23 des Klemmelementes 22 wird also lediglich von der Schutzhülle 40 verschlossen. Hierbei liegt ein die weitere Durchgangsöffnung 23 überdeckender Bereich 42 jener Schutzhülle 40 einer quer zur ersten Richtung R erstreckten Stirnseite 78 der Bewegungserzeugungsvorrichtung 70 gegenüber.

Das besagte Klemmelement 22 bildet ein den Gasgenerator 30 umlaufendes Reservoir für eine Kühlflüssigkeit 60 aus, wobei über die besagte weitere Durchgangsöffnung 23 Druck in das Reservoir 22 eingeleitet werden kann. Zum Herausdrücken der im Reservoir 22 befindlichen Kühlflüssigkeit 60 ist das besagte Reservoir 22 entlang der ersten Richtung R in zwei Teile 27, 28 unterteilt, nämlich einen ersten Teil 28 und einen zweiten Teil 27, die durch ein bewegbares Element 90 in Form einer flexiblen Membran flüssigkeitsdicht voneinander getrennt sind, wobei jene Membran 90 flächig ringförmig ausgebildet ist und insbesondere den Gasgenerator 30 quer zur ersten Richtung R umläuft.

Stellt nun die Bewegungserzeugungsvorrichtung 70 über ihren freien Endabschnitt 72 einen Druck bereit, zum Beispiel durch ein Erzeugen von Verbrennungsgasen (Gasgenerator), zerstören diese heißen Gase den der Stirnseite 78 der Bewegungserzeugungsvorrichtung 70 gegenüberliegenden Bereich 42 der Schutzhülle 40, dringen durch die weitere Durchgangsöffnung 23 hindurch in den ersten Teil 28 des Reservoirs 22 ein und beaufschlagen die quer zur ersten Richtung R erstreckte, in einer Anfangsposition befindliche Membran 90 des Reservoirs 22. In der Anfangsposition kann die Membran 90 (bewegbares Element) dabei eine Wölbung in Richtung auf den Boden 50 des Trägers 5 aufweisen, so dass im zweiten Teil 27 des Reservoirs 22 ein entsprechendes Volumen zum Speichern des Kühlmittels 60 vorhanden ist. Die Membran 90 kann sich in der Anfangsposition - wie in der Figur 2 gezeigt - jedoch auch plan entlang einer Ebene erstrecken.

Beim Beaufschlagen der dem Boden 50 des Trägers 5 zugewandten Seite 91 jener Membran 90 mit dem durch die Bewegungserzeugungsvorrichtung 70 bereitgestellten Druck (heiße Gase) wird die Membran 90 entlang der ersten Richtung R vom Boden 50 des Trägers 5 weg gedrückt, so dass sich eine ggf. vorhandene Wölbung umkehrt und nunmehr in die erste Richtung R weist. Hierbei nimmt die Membran 90 die Kühlflüssigkeit 60 entlang der ersten Richtung R mit und setzt sie durch die Ausströmöffnungen 100 des Reservoirs 22 in den vom Gassack 2 umgebenen Innenraum 29 des Gassackes 2 frei. Jene Ausströmöffnungen 100 sind dabei an einer dem Innenraum 29 des Gassackes 2 zugewandten Oberseite 22a des umlaufenden Reservoirs 22 (Klemmelement bzw. umlaufender Flansch des Diffusors) ausgebildet. Vorzugsweise sind die Ausströmöffnungen 100 des Reservoirs 22 mit Verschlüssen versehen, die infolge des durch die Membran 90 vermittelten Druckes zerstört (geöffnet) werden.

Damit das Kühlmittel 60 direkt in einen Innenraum 29 des Gassackes 2 verströmt werden kann, ist das besagte Reservoir 22 in dem Innenraum 29 des Gassackes 2 angeordnet. Gleichzeitig legt das Reservoir 22 den Gassack 2 des Gassackpaketes 4 am Träger 5 des Airbagmoduls 1 fest. Hierzu wird ein umlaufender Randbereich 2a einer Einströmöffnung des Gassackes 2, durch die hindurch der Diffusor 21 und das Reservoir 22 in den Innenraum 29 des Gassackes 2 eingeführt sind, zwischen dem Boden 50 des Trägers 5 und dem besagten Reservoir 22 festgeklemmt.

Die Bewegungserzeugungsvorrichtung 70 kann zum Freisetzen des Kühlmittels 60 zu einem beliebigen Zeitpunkt durch eine Sensorik ausgelöst werden, und zwar vor, während und nach dem Aufblasen des Gassackes 2. Der Zeitpunkt des Auslösens der Bewegungserzeugungsvorrichtung 70 kann vorzugsweise durch eine Auswerteelektronik errechnet werden, und zwar in Abhängigkeit von durch die Sensorik erfassten Parametern, wie zum Beispiel der Größe (Gewicht) und der Position eines zu schützenden Insassen relativ zum Gassack 2. Die Bestimmung des Zeitpunktes der Auslösung der Bewegungserzeugungsvorrichtung 70 kann in Echtzeit erfolgen.

Durch das Versprühen des Kühlmittels 60 in den Innenraum 29 des Gassackes 2 werden die dort befindlichen Gase gekühlt, so dass nach bekannten Gesetzen der Physik der in jenem Innenraum 29 des Gassackes 2 herrschende Druck entsprechend herabgesetzt wird.

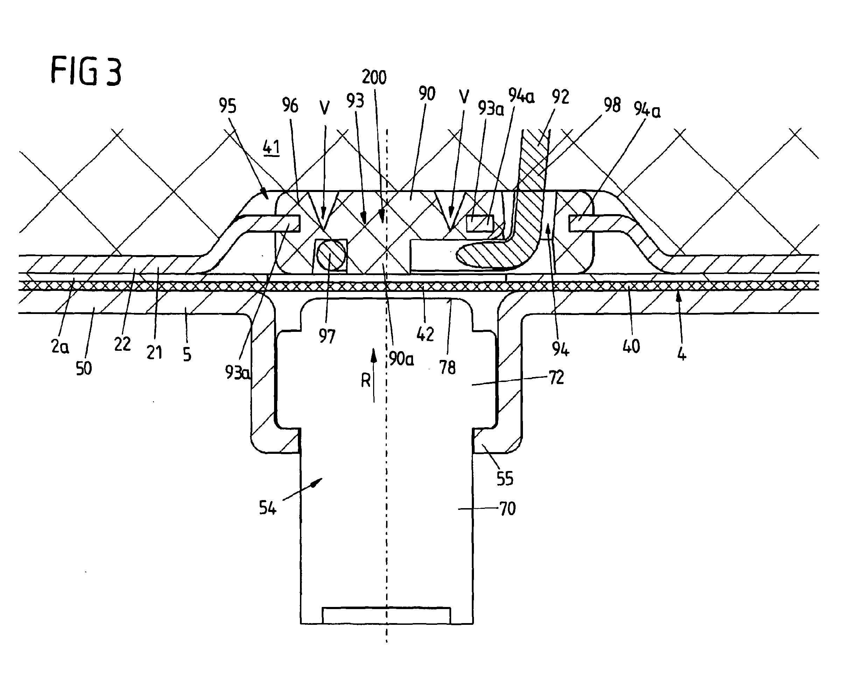

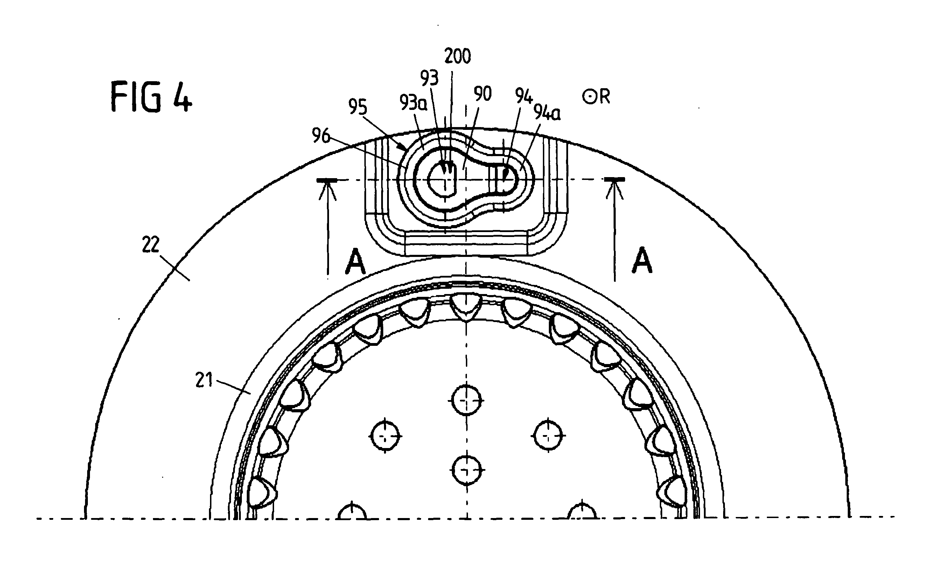

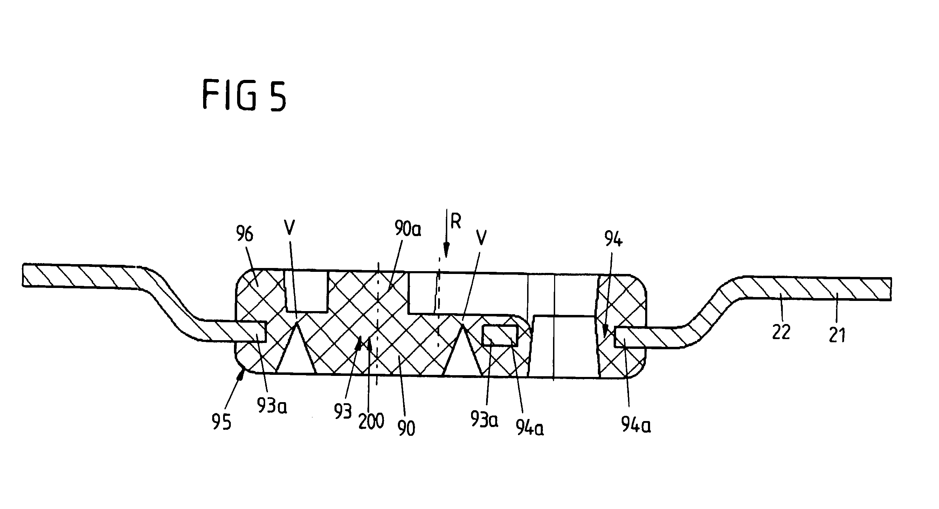

Figur 3 zeigt im Zusammenhang mit den Figuren 4 bis 7 eine weitere Ausführungsform eines erfindungsgemäßen Airbagmoduls, mit einem Gassackpaket 4 und einem Träger 5 nach Art der Figuren 1 und 2.

Im Gegensatz zu den Figuren 1 und 2 ist im Innenraum 41 des Gassackpakets 4 jedoch kein Reservoir 22 mit einer Kühlflüssigkeit 60 vorgesehen, sondern ein Mechanismus zum Auslösen eines Fangbandes 92, das in einem frei gegebenen, nicht unter Spannung stehenden Zustand eine Abströmöffnung (nicht gezeigt) des Gassackes 2 öffnet.

Hierzu sind an einem umlaufenden Flansch 22 eines Diffusors 21, der in bereits beschriebener Weise zum Festklemmen eines Gassackes 2 am Boden 50 des Trägers 5 des Airbagmoduls 1 dienen kann, zwei nebeneinander liegende Durchgangsöffnungen ausgebildet, bezeichnet als erste und zweite Öffnung 93, 94, mit je einem umlaufenden Randbereich 93a, 94a, an die ein Halteelement 95 für das Fangband 92 angespritzt ist, so dass jenes Halteelement 95 die erste, größere Öffnung 93 verschließt und die zweite Öffnung 94 abschnittsweise frei lässt. Das Halteelement 95 weist ein bewegbares Element 90 auf, das in der ersten Öffnung 93 angeordnet ist und über eine umlaufende Sollbruchverbindung V mit einem Rahmen 96 des Halteelementes 95 verbunden ist. Über diesen Rahmen 96 ist das Halteelement 95 vorzugsweise mit dem Flansch 22 verbunden.

Von jenem bewegbaren Element 90 steht entgegen der ersten Richtung R ein freier Endbereich 90a des bewegbaren Elementes 90 ab, um den eine an einem freien Ende des Fangbandes 92 ausgebildete Schlaufe 97 herumgelegt ist. Ein von dieser Schlaufe 97 abgehender mittlerer Abschnitt 98 des Fangbandes 92 ist nun von der dem Boden 50 des Trägers 5 zugewandten Seite des Flansches 22 des Diffusors 21 her durch die freigelassene zweite Öffnung 94 auf eine dem Boden 50 des Trägers 5 des Airbagmoduls 1 abgewandte Seite des Flansches 22 geführt.

Über die Schlaufe 97 ist das besagte Fangband 92 somit am Flansch 22 des Diffusors 21 festgelegt. Jener mittlere Abschnitt 98 des Fangbandes 92 wirkt geeignet mit einer Abströmöffnung des Gassackes 2 zusammen, derart, dass jene Abströmöffnung bei einem aufgeblasenen Gassack 2 verschlossen ist, solange das Fangband 92 über das bewegbare Element 90 und die um den freien Endbereich 90a des bewegbaren Elementes 90 herum gelegte Schlaufe 97 am Flansch 22 des Diffusors 21 festgelegt ist.

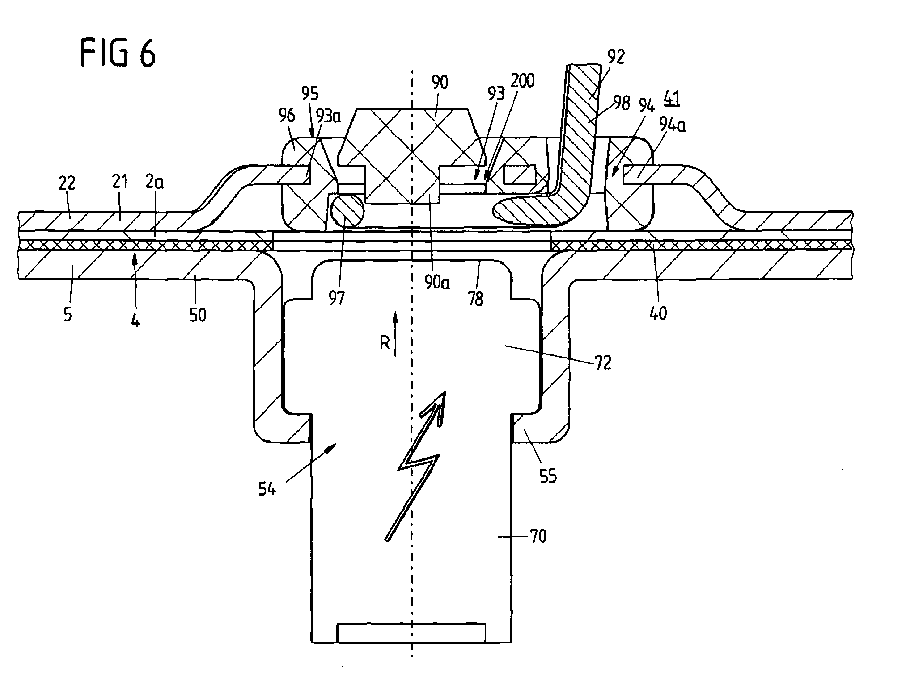

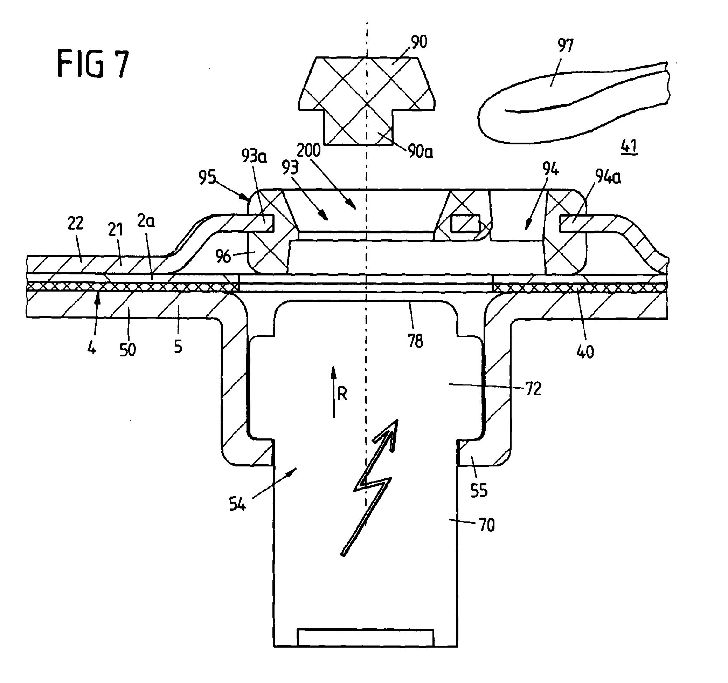

Das Halteelement 95, insbesondere das bewegbare Element 90 liegt mit seinem freien Endbereich 90a, um den die besagte Schlaufe 97 des Fangbandes 92 herumgelegt ist, entlang der ersten Richtung R der Stirnseite 78 des freien Endabschnittes 72 der Bewegungserzeugungsvorrichtung 70 gegenüber. Entlang der ersten Richtung R sind lediglich die Schutzhülle 40 des Gassackpaketes 4 sowie gegebenenfalls ein Bereich des Gassackes 2 zwischen der Bewegungserzeugungsvorrichtung 70 und dem Halteelement 95 angeordnet. Die Bewegungserzeugungsvorrichtung 70 selbst sitzt in einer Durchgangsöffnung 54 des Bodens 50 des Trägers 5 des Airbagmoduls 1, wobei gemäß Figur 3 jene Durchgangsöffnung 54 des Bodens 50 des Trägers 5 in einem vom Boden 50 entgegen der ersten Richtung R abstehenden Bereich des Trägers 5 ausgebildet ist. Zum Festlegen der Bewegungserzeugungsvorrichtung 70 am Träger 5 des Airbagmoduls 1 hintergreift der in den Träger 5 hinein stehende freie Endabschnitt 72 der Bewegungserzeugungsvorrichtung 70 einen umlaufenden Randbereich 55 der besagten Durchgangsöffnung 54 des Bodens 50 des Trägers 5. Wird die Bewegungserzeugungsvorrichtung 70 ausgelöst, dies kann zu einem beliebigen Zeitpunkt geschehen, der durch eine Auswerteelektronik in Echtzeit bestimmt werden kann (vorzugsweise in Abhängigkeit der Größe (Gewicht) und der Position einer zu schützenden Person bezüglich des Gassackes), beaufschlagt die Bewegungserzeugungsvorrichtung 70 einen Bereich 42 der Schutzhülle 40, der entlang der ersten Richtung R dem bewegbaren Element 90 gegenüberliegt, mit einem heißen Gas, so dass jener Bereich 42 der Schutzhülle 40 durchtrennt wird und das dahinter liegende bewegbare Element 90 mit einem entsprechenden Druck beaufschlagt wird. Hierdurch wird die Sollbruchverbindung V zwischen dem bewegbaren Element 90 und dem Rahmen 96 (unbewegliches Teil) des Haltelementes 95 zerstört, so dass das bewegbare Element 90 aus seiner Anfangsposition herausbewegt wird, wobei es die Schlaufe 97 des Fangbandes 92 zum Öffnen besagter Abströmöffnung des Gassackes 2 freigibt (Figuren 6 und 7).

Alternativ oder ergänzend zu dem vorstehend beschriebenen Fangbandmechanismus kann das bewegbare Element 90 selbst eine am Diffusor 21, insbesondere am Flansch 22, ausgebildete Abströmöffnung 200 des Airbagmoduls 1 in seiner Anfangsposition verschließen, die durch die erste Öffnung 93 gebildet sein kann.

Hierbei gibt das bewegbare Element 90 die besagte Abströmöffnung 200 frei, wenn es aus seiner Anfangsposition (unter Zerstörung der Sollbruchverbindung V) herausbewegt wird. Durch die am Diffusor 21 ausgebildete Abströmöffnung 200 können dann im Gassack 2 befindliche Gase aus dem Gassack 2 entweichen und ggf. in einen das Airbagmodul 1 umgebenden Außenraum abgeströmt werden. Ggf. kann auf das Fangband 90 verzichtet werden, so dass mittels des bewegbaren Elementes 90 lediglich die am Diffusor 22 vorgesehene Abströmöffnung 200 geöffnet werden kann.

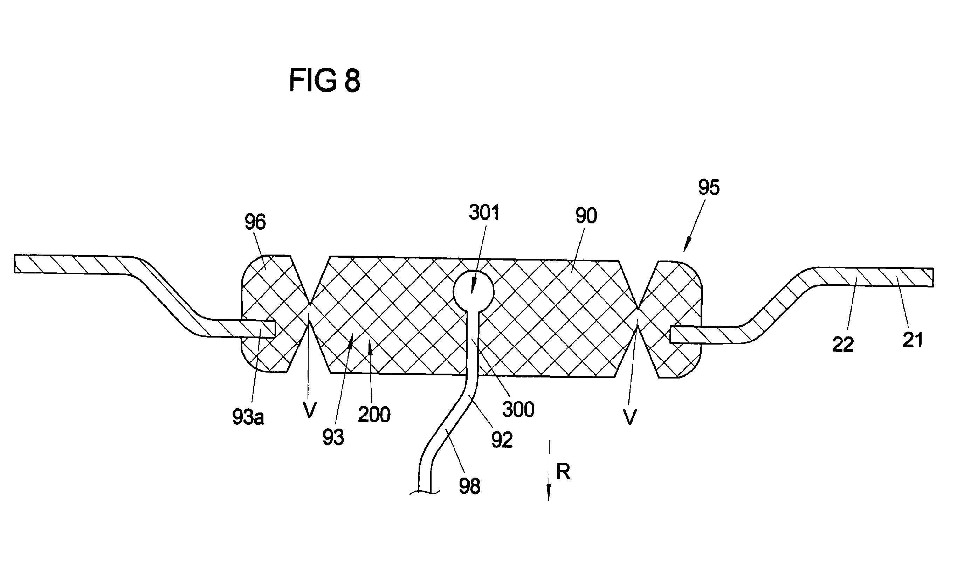

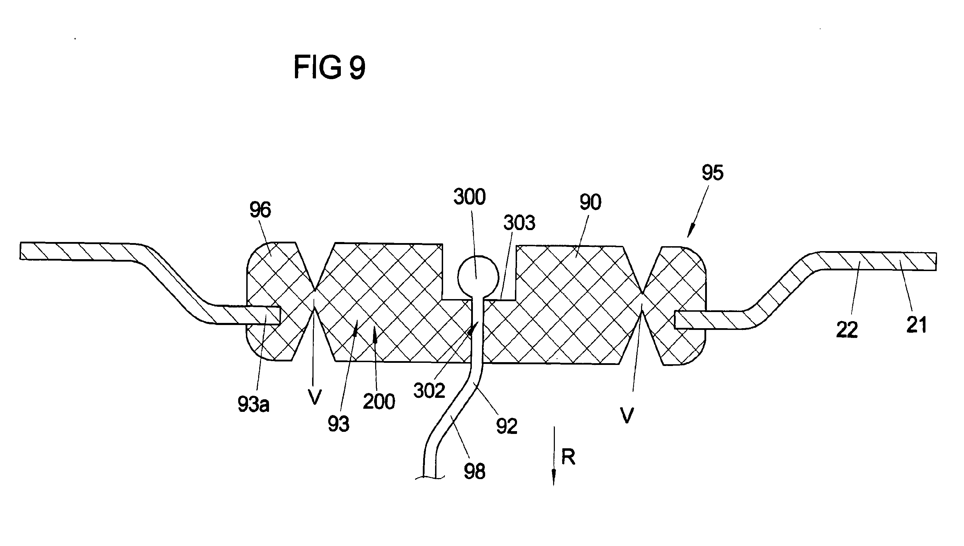

Die Figuren 8 und 9 zeigen eine alternative Ausformung des in den Figur 6 gezeigten bewegbaren Elementes 90, bei dem das Fangband 92 nicht mittels einer Schlaufe 97 am bewegbaren Element 90 festgelegt ist.

Gemäß Figur 8 weist das bewegbare Element 90 eine Ausnehmung 301 auf, in der ein freier Endabschnitt 300 des Fangbandes 92, der an den mittleren Abschnitt 98 des Fangbandes 92 einstückig angeformt ist, dauerhaft formschlüssig gehalten (eingebettet) ist, so dass das bewegbare Element 90, wenn es aus seiner Anfangsposition heraus bewegt wird, den freien Endabschnitt 300 des Fangbandes 92 mitnimmt.

Alternativ hierzu durchgreift der freie Endabschnitt 300 des Fangbandes 92 gemäß Figur 9 eine am bewegbaren Element 90 ausgebildete Durchgangsöffnung 302 und hintergreift dabei einen die Durchgangsöffnung 302 begrenzenden Randbereich 303 jener Durchgangsöffnung 302. Auch bei dieser Variante nimmt das bewegbare Element 90, wenn es aus seiner Anfangsposition heraus bewegt wird, den freien Endabschnitt 300 des Fangbandes 92 mit.

Im Gegensatz zur Figur 6 ist bei den Ausführungsformen gemäß den Figuren 8 und 9 lediglich die erste Öffnung 93 vorhanden. Diese weist den Randbereich 93a auf, an den das Halteelement 95 für das Fangband 92 angespritzt ist, so dass das Halteelement 95 die erste Öffnung 93 verschließt. Das bewegbares Element 90 ist wiederum in der ersten Öffnung 93 angeordnet und über eine umlaufende Sollbruchverbindung V mit einem Rahmen 96 des Halteelementes 95 verbunden, der an den besagten Randbereich 93a angespritzt ist. Die erste Öffnung 93 kann natürlich auch eine vorstehend beschriebene Abströmöffnung 200 des Airbagmoduls 1 bilden, so dass ggf. auch bei den Ausführungsformen gemäß Figuren 8 und 9 auf ein Fangband 92 (und eine im Gassack 2 angeordnete Abströmöffnung) verzichtet werden kann.

Insbesondere sollen noch einmal die folgenden Ausgestaltungen des Erfindungsgedankens herausgestellt werden: So ist in einem Ausführungsbeispiel vorgesehen, dass der freie Endabschnitt 72 der Bewegungserzeugungsvorrichtung 70 entlang der ersten Richtung R in oder vor einer weiteren Durchgangsöffnung 23 einer im Innenraum 41 des Gassackpaketes 4 angeordneten Komponente 22 des Airbagmoduls 1 angeordnet ist.

Weiterhin kann vorgesehen sein, dass die Durchgangsöffnung 54 des Trägers 5 mit der weiteren Durchgangsöffnung 23 jener Komponente 22 fluchtet.

Weiterhin kann vorgesehen sein, dass von einem die weitere Durchgangsöffnung 23 begrenzenden Rand 24 entlang der ersten Richtung R eine umlaufende Wandung 25 der Komponente 22 absteht, wobei jene Wandung 25 den freien Endabschnitt 72 der Bewegungserzeugungsvorrichtung 70 quer zur ersten Richtung R umläuft, und wobei der freie Endabschnitt 72 insbesondere an jener Wandung 25 zumindest unter Zwischenlage der Schutzhülle 40 anliegt.

Weiterhin kann eine Ausführungsform gekennzeichnet sein durch ein den freien Endabschnitt 72 der Bewegungserzeugungsvorrichtung 70 in einer quer zur ersten Richtung R erstreckten Ebene umlaufendes Dichtelement 80, das am freien Endabschnitt 72 anliegt, wobei die Schutzhülle 40 jenes Dichtelement 80 entlang der besagten Ebene umläuft, und wobei der freie Endabschnitt 72 insbesondere an der Wandung 25 unter Zwischenlage des Dichtelementes 80 und der Schutzhülle 40 anliegt.

Weiterhin kann vorgesehen sein, dass das Reservoir 22 durch einen umlaufenden Flansch eines Diffusors 21 des Airbagmoduls 1 gebildet ist.

Weiterhin kann vorgesehen sein, dass das besagte Teil 21 als ein Diffusor zum Verteilen von Gasen ausgebildet ist.

Weiterhin kann vorgesehen sein, dass die Abströmöffnung 200 am Diffusor 21 ausgebildet ist.

Weiterhin kann vorgesehen sein, dass das Fangband 92 zum Festlegen am bewegbaren Element 90 eine Schlaufe 97 aufweist, die das in der Anfangsposition befindliche bewegbare Element 90 umgreift.

Weiterhin kann vorgesehen sein, dass ein freier Endabschnitt 300 des Fangbandes 92 zum Festlegen des Fangbandes 92 am bewegbaren Element 90 formschlüssig in einer Ausnehmung 301 des bewegbaren Elementes 90 angeordnet ist.

Weiterhin kann vorgesehen sein, dass ein freier Endabschnitt 300 des Fangbandes 92 zum Festlegen des Fangbandes 92 am bewegbaren Element 90 in einer Durchgangsöffnung 302 des bewegbaren Elementes 90 angeordnet ist, wobei jener freie Endabschnitt 300 insbesondere einen die Durchgangsöffnung 302 berandenden Randbereich 303 des bewegbaren Elementes 90 hintergreift.

## Patentansprüche

1. Airbagmodul für ein Kraftfahrzeug, mit
• einem Gassackpaket (4), umfassend
- einen Gassack (2),
- ein zusätzliches bewegbares Element (90), das dazu eingerichtet und vorgesehen ist, eine Zustandsgröße des Gassackes (2) zu beeinflussen, und
- eine gasdichte Schutzhülle (40), die einen Innenraum (41) des Gassackpaketes (4) definiert, wobei der Gassack (2) und das bewegbare Element (90) in jenem Innenraum (41) angeordnet sind; und
• einer Bewegungserzeugungsvorrichtung (70), die dazu eingerichtet und vorgesehen ist, zum Beeinflussen der Zustandsgröße das bewegbare Element (90) zu bewegen,
**dadurch gekennzeichnet,**
**dass** die Bewegungserzeugungsvorrichtung (70) separat außerhalb des Innenraumes (41) des Gassackpaketes (4) angeordnet ist, so dass sie zumindest durch die Schutzhülle (40) von den im Innenraum (41) des Gassackpaketes (4) angeordneten Komponenten (2, 90) des Gassackmoduls getrennt ist

2. Airbagmodul nach Anspruch 1, **dadurch gekennzeichnet, dass** die Bewegungserzeugungsvorrichtung (70) dazu eingerichtet und vorgesehen ist, das bewegbare Element (90) aus einer Anfangsposition, in der das bewegbare Element (90) nicht die besagte Zustandsgröße beeinflusst, derart herauszubewegen, dass das bewegbare Element (90) jene Zustandsgröße beeinflusst.

3. Airbagmodul nach Anspruch 1 oder 2, **dadurch gekennzeichnet, dass** die Zustandsgröße ein im Gassack (2) herrschender Druck ist.

4. Airbagmodul nach einem der vorhergegangenen Ansprüche, **dadurch gekennzeichnet, dass** die Bewegungserzeugungsvorrichtung (70) dazu eingerichtet und vorgesehen ist, das bewegbare Element (90) zum Herausbewegen aus der Anfangsposition mit einem Druck zu beaufschlagen, wobei die Bewegungserzeugungsvorrichtung (70) insbesondere als ein Gasgenerator ausgebildet ist.

5. Airbagmodul nach einem der vorhergehenden Ansprüche, **dadurch gekennzeichnet, dass** der Innenraum (41) des Gassackpaketes (4) zum Kompaktifizieren des Gassackpaketes (4) evakuiert ist.

6. Airbagmodul nach einem der vorhergehenden Ansprüche, **gekennzeichnet durch** einen Träger (5) des Airbagmoduls (1) zum Tragen des Gassackpaketes (4), wobei insbesondere die Bewegungserzeugungsvorrichtung (70) an dem Träger (5) angeordnet ist.

7. Airbagmodul nach den Ansprüchen 4 und 6, **dadurch gekennzeichnet, dass** die Bewegungserzeugungsvorrichtung (70) in einer Durchgangsöffnung (54) des Trägers (5) angeordnet ist, so dass ein freier Endabschnitt (72) der Bewegungserzeugungsvorrichtung (70), über den der Druck zum Beaufschlagen des bewegbaren Elementes (90) bereitgestellt wird, entlang einer ersten Richtung (R) aus jener Durchgangsöffnung (54) heraussteht, wobei insbesondere der freie Endabschnitt (72) der Bewegungserzeugungsvorrichtung (70) entlang der ersten Richtung (R) dem bewegbaren Element (90) gegenüber liegt.

8. Airbagmodul nach Anspruch 7, **dadurch gekennzeichnet, dass** ein Bereich (42) der Schutzhülle (40) einer quer zur ersten Richtung (R) erstreckten Stirnseite (78) der Bewegungserzeugungsvorrichtung (70) gegenüber liegt, wobei jener Bereich (42) zerstört wird, wenn die Bewegungserzeugungsvorrichtung (70) den besagten Druck bereitstellt.

9. Airbagmodul nach einem der Ansprüche 7 bis 8, **dadurch gekennzeichnet, dass** der freie Endabschnitt (72) der Bewegungserzeugungsvorrichtung (70) entlang der ersten Richtung (R) in oder vor einer weiteren Durchgangsöffnung (23) einer im Innenraum (41) des Gassackpaketes (4) angeordneten Komponente (22) des Airbagmoduls (1) angeordnet ist.

10. Airbagmodul nach einem der Ansprüche 7 bis 9, **gekennzeichnet durch** eine Hülse (71) zum Tragen der Bewegungserzeugungsvorrichtung (70), wobei jene Hülse (71) die Bewegungserzeugungsvorrichtung (70) umgreift und zum Festlegen der Bewegungserzeugungsvorrichtung (70) am Träger (5) des Airbagmoduls (1) an einem umlaufenden Randbereich (55) der Durchgangsöffnung (54) des Trägers (5) festgelegt ist.

11. Airbagmodul nach Anspruch 6 und nach Anspruch 9 oder Anspruch 10 soweit rückbezogen auf Anspruch 9, **dadurch gekennzeichnet, dass** die weitere Komponente (22) als ein Reservoir zum Speichern eines Kühlmittels (60) ausgebildet ist, insbesondere als ein Reservoir in Form eines Klemmelementes zum Festklemmen des Gassackes (2) am Träger (5) des Airbagmoduls (1), wobei insbesondere das bewegbare Element (90) dazu eingerichtet und vorgesehen ist, beim Herausbewegen aus der Anfangsposition die Kühlflüssigkeit (60) aus dem Reservoir (22) heraus zu drücken, um das Kühlmittel (60) in einen Innenraum (29) des Gassackes (2) freizusetzen.

12. Airbagmodul nach Anspruch 2 und einem der Ansprüche 3 bis 8 soweit rückbezogen auf Anspruch 2, **dadurch gekennzeichnet, dass** das bewegbare Element (90) in seiner Anfangsposition an einem im Innenraum (41) des Gassackpakets (4) angeordneten Teil (21) des Airbagmoduls (1) festgelegt ist.

13. Airbagmodul nach Anspruch 12, **dadurch gekennzeichnet, dass** das bewegbare Element (90) über eine Sollbruchverbindung (V) an dem Teil (21) des Airbagmoduls festgelegt ist, wobei jene Sollbruchverbindung (V) beim Herausbewegen des bewegbaren Elementes (90) aus seiner Anfangsposition durchtrennt wird.

14. Airbagmodul nach Anspruch 2 oder einem der Ansprüche 3 bis 8, 12 bis 13 soweit rückbezogen auf Anspruch 2, **dadurch gekennzeichnet, dass** das bewegbare Element (90) dazu eingerichtet und vorgesehen ist, in seiner Anfangsposition eine Abströmöffnung (200) des Airbagmoduls zu verschließen, durch die in einem geöffneten Zustand Gas aus dem Gassack (2) entweichen kann, wobei das bewegbare Element (90) beim Herausbewegen aus der Anfangsposition die Abströmöffnung (200) freigibt, so dass Gas aus dem Gassack (2) durch die Abströmöffnung (200) hindurch entweichen kann.

15. Airbagmodul nach Anspruch 2 oder einem der Ansprüche 3 bis 8, 12 bis 14 soweit rückbezogen auf Anspruch 2 **dadurch gekennzeichnet, dass** das bewegbare Element (90) dazu eingerichtet und vorgesehen ist, in seiner Anfangsposition ein Fangband (92) am Airbagmodul festzulegen, derart, dass ein mit dem Fangband (92) zusammenwirkender Verschluss einer Abströmöffnung des Gassackes (2) jene Abströmöffnung verschließt, wobei das bewegbare Element (90) beim Herausbewegen aus der Anfangsposition das Fangband (92) freigibt, so dass jener Verschluss geöffnet wird.

## Claims

1. Airbag module for a motor vehicle, comprising
• a gas sack package (4), comprising
- a gas sack (2),
- an additional movable element (90) configured and provided to influence a state variable of the gas sack (2), and
- a gas-tight protective covering (40) that defines an inner space (41) of the gas sack package (4), wherein the gas sack (2) and the moveable element (90) are arranged in said inner space (41), and
• a movement generating device (70) configured and provided to move the moveable element (90), in order to influence the state variable,
**characterized in that**
the movement generating device (70) is arranged separately outside the inner space (41) of the gas sack package (4), so that it is at least separated by the protective covering (40) from the components (2, 90) of the airbag module arranged in the inner space (41) of the gas sack package (4).

2. Airbag module according to claim 1, **characterized in that** the movement generating device (70) is configured and provided to move the movable element (90) out of an initial position, in which the movable element (90) does not influence said state variable, in a way that the movable element (90) influences said state variable.

3. Airbag module according to claim 1 or 2, **characterized in that** the state variable is a pressure inside the gas sack (2).

4. Airbag module according to one of the preceding claims, **characterized in that** the movement generating device (70) is configured and provided to act on the movable element (90) with a pressure, in order to move the movable element (90) out of the initial position, wherein the movement generating device (70) is particularly formed as a gas generator.

5. Airbag module according to one of the preceding claims, **characterized in that** the inner space (41) of the gas sack package (4) is evacuated for compacting the gas sack package (4).

6. Airbag module according to one of the preceding claims, **characterized by** a carrier (5) of the airbag module (1) for carrying the gas sack package (4), wherein particularly the movement generating device (70) is arranged on the carrier (5).

7. Airbag module according to the claims 4 and 6, **characterized in that** the movement generating device (70) is arranged in a through-opening (54) of the carrier (5), so that a free end portion (72) of the movement generating device (70) via which the pressure for acting on the movable element (90) is provided, protrudes along a first direction (R) out of said through-opening (54), wherein particularly the free end portion (72) of the movement generating device (70) faces the movable element (90) along the first direction (R).

8. Airbag module according to claim 7, **characterized in that** a region (42) of the protective covering (40) faces a front face (78) of the movement generating device (70) extending across the first direction (R), wherein said region (42) is destroyed, when the movement generating device (70) provides said pressure.

9. Airbag module according to one of the claims 7 to 8, **characterized in that** the free end portion (72) of the movement generating device (70) is arranged along the first direction (R) in or in front of a further through-opening (23) of a component (22) of the airbag module (1) arranged in the inner space (41) of the gas sack package (4).

10. Airbag module according to one of the claims 7 to 9, **characterized by** a shell (71) for carrying the movement generating device (70), wherein said shell (71) encompasses the movement generating device (70) and is, for fixing the movement generating device (70) to the carrier (5) of the airbag module (1), fixed to a circulating boundary region (55) of the through-opening (54) of the carrier (5).

11. Airbag module according to claim 6 and according to claim 9 or claim 10 when referred back to claim 9, **characterized in that** the further component (22) is formed as a reservoir for storing a coolant (60), particularly as a reservoir in the form of a clamping element for clamping the gas sack (2) to the carrier (5) of the airbag module (1), wherein particularly the movable element (90) is configured and provided to press the coolant (60) out of the reservoir (22) upon moving out of the initial position, in order to set free the coolant (60) into an inner space (29) of the gas sack (2).

12. Airbag module according to claim 2 and one of the claims 3 to 8 when referred back to claim 2, **characterized in that** the movable element (90) is fixed in its initial position to a part (21) of the airbag module (1) arranged in the inner space (41) of the gas sack package (4).

13. Airbag module according to claim 12, **characterized in that** the movable element (90) is fixed through a predetermined breaking connection (V) to the part (21) of the airbag module, wherein said predetermined breaking connection (V), upon moving of the movable element (90) out of its initial position, is severed.

14. Airbag module according to claim 2 or one of the claims 3 to 8, 12 to 13 when referred back to claim 2, **characterized in that** the movable element (90) is configured and provided to close a discharge opening (200) of the airbag module in its initial position, through which, in an opened state, gas can escape out of the gas sack (2), wherein the movable element (90) upon moving out of the initial position sets free the discharge opening (200), so that gas can escape through the discharge opening (200) out of the gas sack (2).

15. Airbag module according to claim 2 or one of the claims 3 to 8, 12 to 14 when referred back to claim 2, **characterized in that** the movable element (90) is configured and provided to fix in its initial position a tether (92) to the airbag module in a way, that a closure of a discharge opening of the gas sack (2) interacting with the tether (92) closes said discharge opening, wherein the movable element (90) upon moving out of the initial position sets free the tether (92), so that said closure is opened.

## Revendications

1. Module d'airbag pour un véhicule automobile, comprenant
- un coussin gonflable en paquet (4) comprenant
- un coussin gonflable (2),
- un élément déplaçable supplémentaire (90) qui est conçu et prévu pour influencer une grandeur d'état du coussin gonflable (2), et
- une enveloppe protectrice étanche aux gaz (40), qui définit un espace intérieur (41) du coussin gonflable en paquet (4), dans lequel le coussin gonflable (2) et l'élément déplaçable (90) sont agencés dans ledit espace intérieur (41) ; et
- un dispositif de génération de déplacement (70) qui est conçu et prévu pour déplacer l'élément déplaçable (90) afin d'influencer la grandeur d'état,
**caractérisé en ce que**
le dispositif de génération de déplacement (70) est agencé séparément à l'extérieur de l'espace intérieur (41) du coussin gonflable en paquet (4), de telle façon qu'il est séparé au moins par l'enveloppe protectrice (40) vis-à-vis des composants (2, 90), agencés dans l'espace intérieur (41) du coussin gonflable en paquet (4), du module d'airbag.

2. Module d'airbag selon la revendication 1, **caractérisé en ce que** le dispositif de génération de déplacement (70) est conçu et prévu pour déplacer l'élément déplaçable (90) depuis une position de départ dans laquelle élément déplaçable (90) n'influence pas ladite grandeur d'état, de telle façon que l'élément déplaçable (90) influence ladite grandeur d'état.

3. Module d'airbag selon la revendication 1 ou 2, **caractérisé en ce que** la grandeur d'état est une pression qui règne dans le coussin gonflable (2).

4. Module d'airbag selon l'une des revendications précédentes, **caractérisé en ce que** le dispositif de génération de déplacement (70) est conçu et prévu pour solliciter l'élément déplaçable (90), pour le déplacer hors de la position de départ, avec une pression, et le dispositif de génération de déplacement (70) est réalisé en particulier comme un générateur de gaz.

5. Module d'airbag selon l'une des revendications précédentes, **caractérisé en ce que** l'espace intérieur (41) du coussin gonflable en paquet (4) est évacué pour rendre compact le coussin gonflable en paquet (4).

6. Module d'airbag selon l'une des revendications précédentes, **caractérisé par** un support (5) du module d'airbag (1) pour supporter le coussin gonflable en paquet (4), et en particulier le dispositif de génération de déplacement (70) est agencé sur le support (5).

7. Module d'airbag selon les revendications 4 et 6, **caractérisé en ce que** le dispositif de génération de déplacement (70) est agencé dans une ouverture traversante (54) du support (5) de telle façon qu'un tronçon terminal libre (72) du dispositif de génération de déplacement (70), via lequel est amenée la pression pour solliciter l'élément déplaçable (90), dépasse le long d'une première direction (R) hors de ladite ouverture traversante (54), et en particulier le tronçon terminal libre (72) du dispositif de génération de déplacement (70) se trouve à l'opposé de l'élément déplaçable (90) le long de la première direction (R).

8. Module d'airbag selon la revendication 7, **caractérisé en ce qu'**une zone (42) de l'enveloppe protectrice (40) est à l'opposé d'une face frontale (78), s'étendant transversalement à la première direction (R), du dispositif de génération de déplacement (70), et ladite zone (42) est détruite quand le dispositif de génération de déplacement (70) amène ladite pression.

9. Module d'airbag selon l'une des revendications 7 à 8, **caractérisé en ce que** le tronçon terminal libre (72) du dispositif de génération de déplacement (70) est agencé le long de la première direction (R) dans ou devant une autre ouverture traversante (23) d'une composante (22), agencée dans l'espace intérieur (41) du coussin gonflable en paquet (4), du module d'airbag (1).

10. Module d'airbag selon l'une des revendications 7 à 9, **caractérisé par** un manchon (71) pour porter le dispositif de génération de déplacement (70), ledit manchon (71) enserrant le dispositif de génération de déplacement et, pour immobiliser le dispositif de génération de déplacement (70) sur le support (5) du module d'airbag (1), le manchon est immobilisé sur une zone de bordure périphérique (55) de l'ouverture traversante (54) du support (5).

11. Module d'airbag selon la revendication 6 et selon la revendication 9 ou la revendication 10 dans la mesure où elle dépend de la revendication 9, **caractérisé en ce que** l'autre composante (22) est réalisée comme un réservoir pour accumuler un agent de refroidissement (60), en particulier comme un réservoir sous la forme d'un élément de serrage pour serrer fermement le coussin gonflable (2) sur le support (5) du module d'airbag (1), et en particulier l'élément déplaçable (90) est conçu et prévu, lors du déplacement hors de la position de départ, pour forcer le liquide de refroidissement (60) hors du réservoir (22), afin de dégager l'agent de refroidissement (60) dans un espace intérieur (29) du coussin gonflable (2).

12. Module d'airbag selon la revendication 2 et l'une des revendications 3 à 8 dans la mesure où elle dépend de la revendication 2, **caractérisé en ce que** l'élément déplaçable (90) est immobilisé dans sa position de départ contre une partie (21), agencée dans l'espace intérieur (41) du coussin gonflable en paquet (4), du module d'airbag (1).

13. Module d'airbag selon la revendication 12, **caractérisé en ce que** l'élément déplaçable (90) est immobilisé via une liaison à rupture de consigne (V) contre la partie (21) du module d'airbag, et ladite liaison à rupture de consigne (V) est rompue lors du déplacement de l'élément déplaçable (90) hors de sa position de départ.

14. Module d'airbag selon la revendication 2 ou l'une des revendications 3 à 8, 12 à 13, dans la mesure où elle dépend de la revendication 2, **caractérisé en ce que** l'élément déplaçable (90) est conçu et prévu pour obturer dans sa position de départ une ouverture d'échappement (200) du module d'airbag, via laquelle, dans un état ouvert, du gaz peut s'échapper hors du coussin gonflable (2), dans lequel l'élément déplaçable (90) libère, lors du déplacement hors de la position de départ, l'ouverture d'échappement (200), de sorte que du gaz peut s'échapper hors du coussin gonflable (2) en traversant l'ouverture d'échappement (200).

15. Module d'airbag selon la revendication 2 ou l'une des revendications 3 à 8, 12 à 14, dans la mesure où elle dépend de la revendication 2, **caractérisé en ce que** l'élément déplaçable (90) est conçu et prévu pour immobiliser, dans sa position de départ, une bande de retenue (92) sur le module d'airbag, de telle façon qu'un obturateur, coopérant avec la bande de retenue (92), d'une ouverture d'échappement du coussin gonflable (2), obture ladite ouverture d'échappement, et l'élément déplaçable (90) dégage, lors du déplacement hors de la position de départ, la bande de retenue (92), de sorte que ledit obturateur est ouvert.
